# EUROPEAN PATENT SPECIFICATION

(11) **EP 4 090 198 B1**
(45) Date of publication and mention of the grant of the patent: **20.08.2025**
(21) Application number: 21741707.0
(22) Date of filing: 11.01.2021
(51) Int. Cl.: A47B 95/02, F16B 12/26, F16B 21/08, F16B 21/18

(54) **A SET COMPRISING A PANEL AND A PULL GRIP ARRANGED WITH A MECHANICAL LOCKING MECHANISM**
SET MIT EINER PLATTE UND EINEM ZUGGRIFF, DIE MIT EINEM MECHANISCHEN VERRIEGELUNGSMECHANISMUS ANGEORDNET SIND
ENSEMBLE COMPRENANT UN PANNEAU ET UNE POIGNÉE DE TRACTION AGENCÉE AVEC UN MÉCANISME DE VERROUILLAGE MÉCANIQUE

(30) Priority: 13.01.2020 SE 2050013
(43) Date of publication of application: 23.11.2022
(73) Proprietor: Välinge Innovation AB, 263 64 Viken (SE)
(72) Inventor: SVENSSON, Johan, 254 70 Kattarp (SE)
(74) Representative: Välinge Innovation AB
(86) International application number: PCT/SE2021/050010
(87) International publication number: WO 2021/145813

(56) References cited:
- WO-A1-2015/105449
- WO-A1-2016/175701
- DE-A1- 1 429 684
- GB-A- 2 000 436
- US-A- 1 516 975
- US-A1- 2007 266 666
- US-A1- 2014 230 332

## Description

### Technical field of the invention

Embodiments of the present invention relate to a set comprising a component and a panel configured to be locked together with a mechanical locking device. The component may be a furniture component, such as e.g. a handle, and the panel may be a front panel of a furniture, e.g. for a cabinet or a drawer. The mechanical locking device may comprise a flexible tongue.

### Technical background

Furniture components, such as e.g. handles, to be fixed to e.g. a cabinet or a drawer for the opening thereof, are known in the art. The furniture components earlier described are fixed to the furniture by e.g. screws or glue. This has the drawback that the screws will be visible, at least when opening the cabinet or drawer, or that a handle that is glued to the cabinet or drawer might fall off.

The above description of various known aspects is the applicant's characterization of such, and is not an admission that any of the above description is considered as prior art.

The document WO 2016/175701 A1 or the document US 1 516 975 A discloses a set comprising a component, a panel and a mechanical locking device for locking the component to the panel.

### Summary of the invention

It is an object of at least certain embodiments and aspects of the present invention to provide an improvement over the above described techniques and known art; particularly, to achieve a set that could easily be assembled while also giving a stable and aesthetic result.

A further object of at least certain aspects of the present invention is to facilitate assembling of sets of a component and panel configured to be assembled with a locking device that is easy to manufacture and to use.

A further object of at least certain aspects of the present invention is to facilitate assembling of a component and panel configured to be assembled with a locking device that is easy to use and install and which reduces the risk of incorrect installation thereof.

At least some of these and other objects and advantages that will be apparent from the description have been achieved by a set comprising a component, a panel and a mechanical locking device for locking the component to the panel according to claim 1.

According to an aspect the extruded component has a fixed cross-section along an extrusion direction, which is perpendicular to the first direction and parallel to the second edge surface .

According to an aspect the locking groove comprises a first side wall and an opposite second side wall and a bottom surface extending between the first side wall and the second side wall.

According to an aspect the tongue groove is positioned at the first side wall and/or the second side wall.

According to an aspect the component is made of a metal, such as an aluminium material, or a plastic, such as a thermoplastic material.

According to an aspect the locking element comprises a neck, wherein said neck is positioned between the insertion groove and the first edge surface.

According to the invention, the component comprises at least one locking part protruding from the first edge surface, wherein the locking part is configured to cooperate with a first side wall of the locking groove for locking of the component to the panel in a second direction, which is perpendicular to the first direction.

According to the invention, the component comprises another locking part, protruding from the first edge surface, configured to cooperate with a second side wall of the locking groove for locking of the component to the panel in a direction which is opposite to the second direction.

According to an aspect the neck is positioned between the locking part and said another locking part.

According to an aspect the insertion groove is essentially parallel with the first edge surface, wherein the flexible tongue is displaceable in the insertion groove.

According to an aspect the locking element comprises at least one protruding part at a bottom surface of the locking element, wherein the protruding part is configured to cooperate with a bottom surface of the locking groove to counteract a displacement of the component relative the panel in an extrusion direction, which is perpendicular to the first direction and parallel to the second edge surface.

According to an aspect the first edge surface is configured to cooperate with the second edge surface for a locking of the component to the panel in a direction which is opposite to the first direction.

According to an aspect a bottom surface of the locking groove has a radial/curved shape.

According to an aspect the panel is a front panel of a furniture, for a cabinet or a drawer.

According to an aspect the component is a furniture component, such as e.g. a handle.

According to an aspect an opening of the insertion groove is in the opposite direction of the opening direction of the furniture.

According to an aspect the component comprises a gripping part which protrudes from the first edge surface and the second edge surface comprises an elevation configured to cooperate with the gripping part.

According to an aspect the at least one protruding part extends a distance of about 0,5mm to about 5mm, preferably about 1 mm to about 3mm, more preferably about 2mm from the bottom surface of the locking element.

According to an aspect the tongue groove is positioned at a distance of about 1 mm to about 20 mm, preferably about 3 mm to about 15 mm, more preferably about 8 mm, from the second edge surface.

According to an aspect the insertion groove is positioned at a distance of about 1 mm to about 20 mm, preferably about 3 mm to about 15 mm, more preferably about 8 mm, from the first edge surface.

According to an aspect the edges of an opening of the locking groove are chamfered.

According to an aspect the locking element has a length within the interval of about 4 mm to about 25 mm, more preferably about 8 mm to about 16 mm, even more preferably about 10 mm to about 12mm.

According to an aspect the locking groove has a depth of about 4 mm to about 30 mm, more preferably about 9 mm to about 17 mm, even more preferably about 11 mm to about 13 mm.

According to an aspect the length of the locking element is the same as, or essentially the same as, the depth of the locking groove.

According to an aspect, when the component comprises a locking part and another locking part, a distance between the locking parts is about 3 mm to about 15 mm, preferably about 5 mm to about 10 mm, more preferably about 7 mm.

According to an aspect the locking groove has a width of about 3 mm to about 15 mm, preferably about 5 mm to about 10 mm, more preferably about 7 mm.

According to an aspect the neck has a width of about 0,5 mm to about 5 mm, preferably about 1 mm to about 3 mm, more preferably about 2 mm.

According to an aspect the distance between said locking parts, and/or the distance between the locking part and the neck of the locking element, is smaller than or essentially the same as the width of the locking groove.

According to an aspect the core of the panel may be a wood-based core, preferably made of MDF, HDF, OSB, WPC, plywood or particleboard. The core may also be a plastic core comprising thermosetting plastic or thermoplastic e.g. vinyl, PVC, PU or PET. The plastic core may comprise fillers.

According to an aspect the panel may also be of solid wood.

According to an aspect the panel may be provided with a decorative layer, such as a foil or a veneer, on one or more surfaces.

### Brief description of the drawings

These and other aspects, features and advantages of which embodiments of the invention are capable of, will be apparent and elucidated from the following description of embodiments and aspects of the present invention, reference being made to the accompanying drawings, in which
FIGS. 1A-1B show an embodiment of the component and panel in a non-locked and in a locked position. The component comprises two locking parts.
FIGS. 2A-2B show an embodiment of the component and panel in a non-locked and in a locked position. The component comprises one locking part.
FIGS. 3A-3B show an embodiment of the component and panel in a non-locked and in a locked position. The component comprises two locking parts and a gripping part protruding from the first edge surface. The second edge surface comprises an elevation configured to cooperate with the gripping part.
FIGS. 4A-4B show an embodiment of the component and panel in an un-assembled and in an assembled state. The component comprises two locking parts. No flexible tongue is positioned in the insertion groove.
FIG. 5 shows an enlargement of the locking element, with a flexible tongue positioned in the insertion groove.
FIGS. 6A-6B shows a partial perspective view of the component and panel in a locked and a non-locked position according to an embodiment of the invention.
FIGS. 7A-7B shows a partial perspective view of the component and panel in a locked and a non-locked position according to an embodiment of the invention.
FIGS. 8A-8B shows a partial perspective view of the component and panel in a locked and a non-locked position according to an embodiment of the invention.
FIGS. 9A-9B shows a partial perspective view of the component and panel in a locked and a non-locked position according to an embodiment of the invention.
FIG. 10A shows views of the component and panel in a non-locked and a locked position as seen from the front of a drawer or cabinet.
FIG. 10B shows a side view of the component according to an embodiment of the invention.
FIG. 11 shows a view of an assembled drawer comprising a component and a panel according to an embodiment of the invention.
FIG. 12 shows a side view of an assembled drawer comprising a component and a panel according to an embodiment of the invention.

### Detailed description

Specific embodiments of the invention will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example aspects may be implemented at least in part by means of both hardware and software, and that several "means", "units" or "devices" may be represented by the same item of hardware.

The different aspects, alternatives and embodiments of the invention disclosed herein can be combined with one or more of the other aspects, alternatives and embodiments described herein. Two or more aspects can be combined.

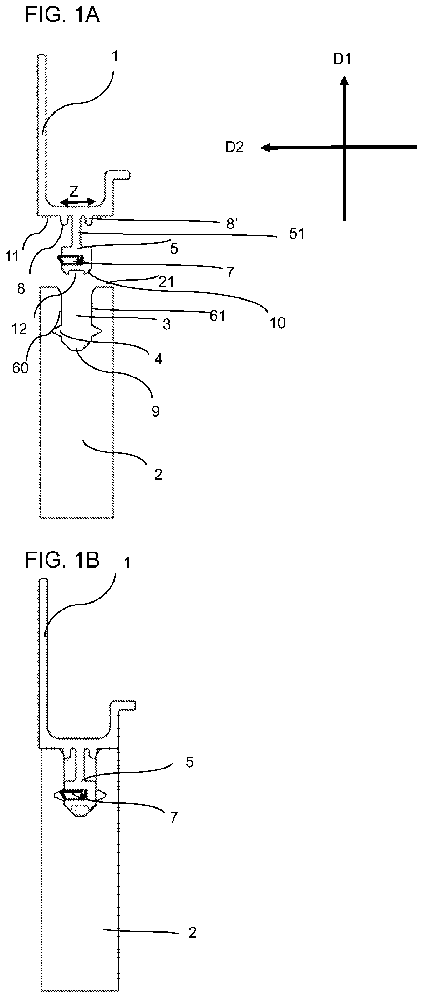

An embodiment of the invention is shown e.g. in FIGS. 1A-4B including a set comprising a component 1, a panel 2 and a mechanical locking device for locking the component 1 to the panel 2. The component 1 comprises a first edge surface 11 and the panel 2 comprises a second edge surface 21. The mechanical locking device comprises a locking groove 3 at the second edge surface 21. The locking groove 3 comprises at least one tongue groove 4. The mechanical locking device further comprises at least one locking element 5 at the first edge surface 11. The locking element 5 comprises at least one insertion groove 6 and a flexible tongue 7 positioned in the insertion groove 6. The flexible tongue 7 is configured to cooperate with the tongue groove 4 for locking of the component 1 to the panel 2 in a first direction D1, which is perpendicular to the second edge surface 21. The component 1 is an extruded component.

The extruded component 1 may have a fixed cross-section along an extrusion direction, which is perpendicular to the first direction D1 and parallel to the second edge surface 21 .

The locking groove 3 may comprise a first side wall 60 and an opposite second side wall 61 and a bottom surface 9 extending between the first side wall 60 and the second side wall 61.

The tongue groove 4 may be positioned at the first side wall 60 and/or the second side wall 61.

The component 1 may be made of a metal, such as an aluminium material, or a plastic, such as a thermoplastic material.

If the component 1 was made from e.g. a wooden material it may easily break. Extruding the component 1 from a metal or a plastic material may result in a component 1 that is strong, and which is produced in a fast, convenient and cost efficient way.

The tongue groove 4 may be positioned at a distance of about 1 mm to about 20 mm, preferably about 3 mm to about 15 mm, more preferably about 8 mm, from the second edge surface 21.

The panel 2 may have a thickness T in the range of about 10 mm to about 30 mm, or about 15 mm to about 20 mm.

The insertion groove 6 in the locking element 5 may be positioned at a distance of about 1 mm to about 20 mm, preferably about 3 mm to about 15 mm, more preferably about 8 mm, from the first edge surface 11.

The locking groove 3 may have a width W1 of about 3 mm to about 15 mm, preferably about 5 mm to about 10 mm, more preferably about 7 mm.

The locking groove 3 may have a depth Y of about 4 mm to about 30 mm, more preferably about 9 mm to about 17 mm, even more preferably about 11 mm to about 13 mm.

The edges of the opening of the locking groove 3 may be chamfered. This facilitates the assembly and locking of the component 1 to the panel 2, and reduces cracking of the edges of the locking groove 3.

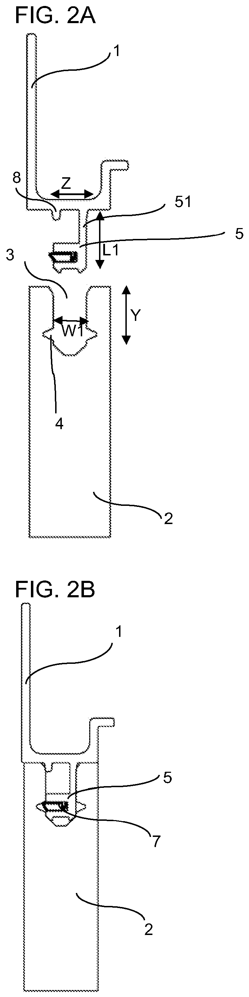

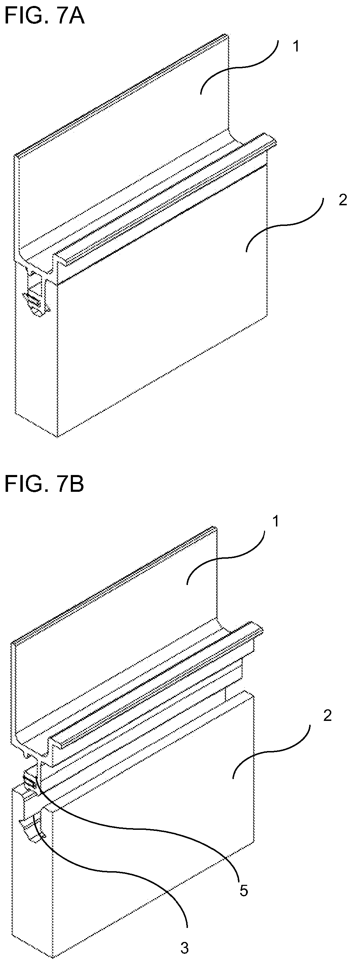

The component 1 may further comprise at least one locking part 8. The locking part 8 may protrude from the first edge surface 11. The locking part 8 may be configured to cooperate with a first side wall 60 of the locking groove 3 for locking of the component 1 to the panel 2 in a second direction D2. The second direction D2 is perpendicular to the first direction D1. An embodiment where the component 1 comprises one locking part 8 is shown in FIGS. 2A-2B and 7A-7B.

For the embodiment comprising one locking part 8, the distance X between the locking element 5 and the locking part 8 is preferably about 3 mm to about 15 mm, preferably about 5 mm to about 10 mm, more preferably about 7 mm.

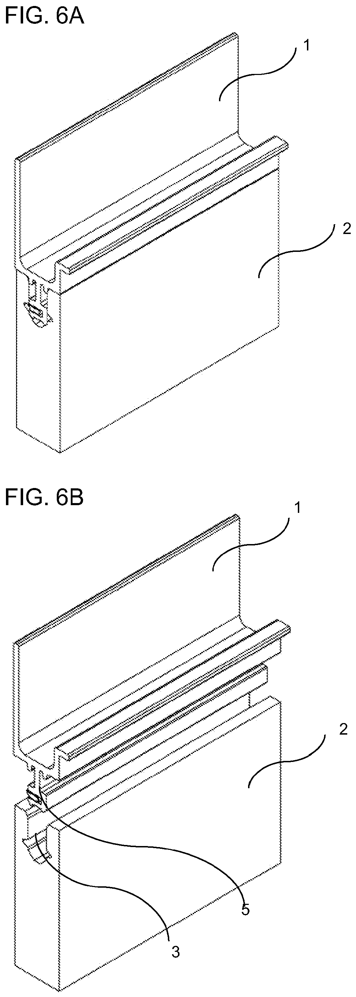

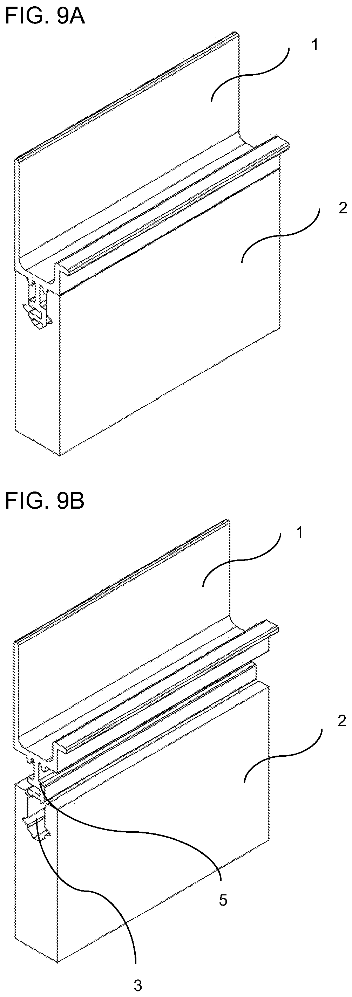

The component 1 may comprise another locking part 8', which may protrude from the first edge surface 11. The locking part 8' may be configured to cooperate with a second side wall 61 of the locking groove 3 for locking of the component 1 to the panel 2 in a direction which is opposite to the second direction D2. Different embodiments comprising two locking parts 8,8' are shown in FIGS. 1A-1B, 3A-4B, 6A-6B and 8A-9B.

The locking element 5 and/or the neck 51 may be configured to cooperate with the second side wall 61 of the locking groove 3 for locking of the component 1 to the panel 2 in a direction which is opposite to the second direction D2.

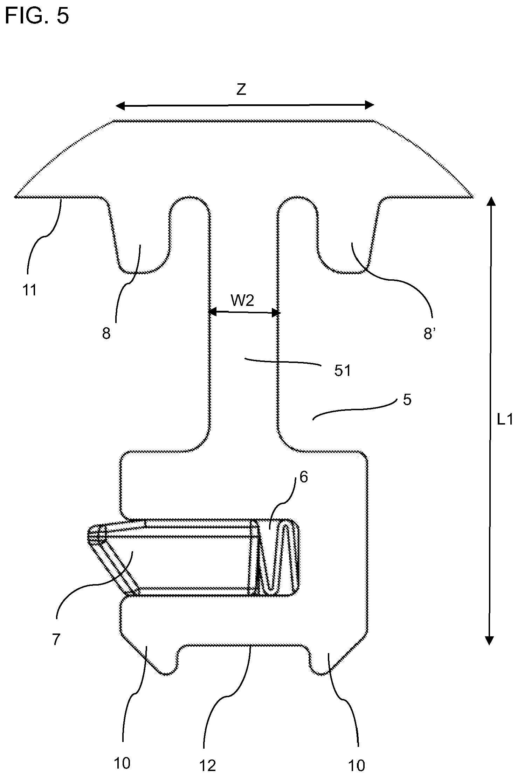

An enlargement of the locking element 5 is shown in FIG. 5. The locking element 5 may comprise a neck 51, where said neck 51 may be positioned between the insertion groove 6 and the first edge surface 11. The neck 51 may have a width W2 of about 0,5 mm to about 5 mm, preferably about 1 mm to about 3 mm, more preferably about 2 mm.

The locking element 5 may have a length L1 within the interval of about 4 mm to about 25 mm, more preferably about 8 mm to about 16 mm, even more preferably about 10 mm to about 12mm.

The length L1 of the locking element 5 may be the same as, or essentially the same as, the depth Y of the locking groove 3.

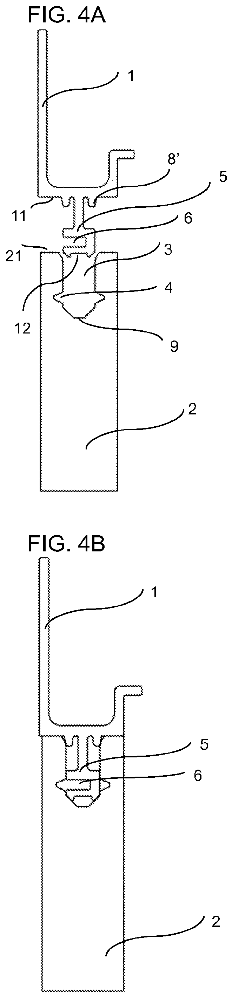

A flexible tongue 7 may be positioned in the insertion groove 6. FIGS. 4A-4B show an embodiment of the invention before the flexible tongue 7 has been inserted in the insertion groove 6. The insertion groove 6 may be essentially parallel with the first edge surface 11 and the flexible tongue 7 may be displaceable therein.

The neck 51 of the locking element 5 may, in one embodiment, be positioned between the locking part 8 and said another locking part 8'.

The distance Z between the locking part 8 and said another locking part 8' may be about 3 mm to about 15 mm, preferably about 5 mm to about 10 mm, more preferably about 7 mm.

According to an aspect, the width W2 of the neck 51, the distance X between the locking element 5 and the locking part 8, and/or the distance Z between the locking part 8 and said another locking part 8', is smaller than, or essentially the same as, the width W1 of the locking groove 3.

The locking element 5 may comprise at least one protruding part 10 at a bottom surface 12 of the locking element 5. The protruding part 10 may be configured to cooperate with a bottom surface 9 of the locking groove 3 to counteract a displacement of the component 1 relative the panel 2 in an extrusion direction, which is perpendicular to the first direction D1 and parallel to the second edge surface 21. The at least one protruding part 10 may extend a distance of about 0,5mm to about 5mm, preferably about 1 mm to about 3mm, more preferably about 2mm, from the bottom surface 12 of the locking element 5.

The first edge surface 11 may be configured to cooperate with the second edge surface 21 for a locking of the component 1 to the panel 2 in a direction which is opposite to the first direction D1.

The bottom surface 9 of the locking groove 3 may have a radial/curved shaped. This reduces the risk that the locking groove 3 cracks.

The panel 2 may e.g. be a front panel of a furniture, such as for a cabinet or a drawer. The component 1 may e.g. be a furniture component, such as e.g. a handle.

An opening of the insertion groove 6 may be in the opposite direction of the opening direction D3 of the furniture. This gives a better locking than if the opening of the insertion groove 6 was in the same direction as the opening direction D3.

The component 1 may comprise a gripping part 30 which protrudes from the first edge surface 11. This facilitates the opening of the cabinet or drawer, since the fingers of a person opening the cabinet or drawer easily can get a good grip around the gripping part 30.

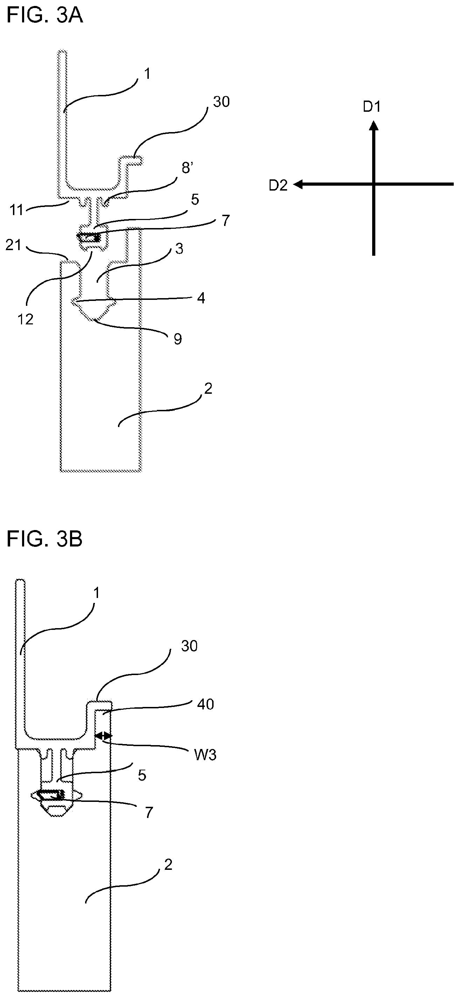

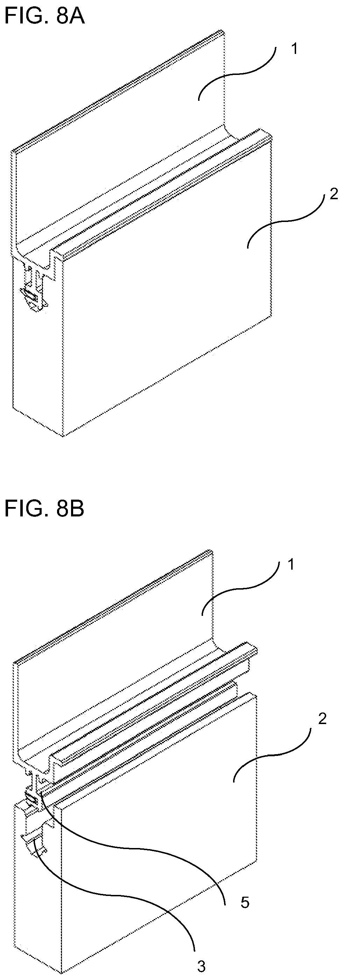

The second edge surface 21 may comprise an elevation 40 as seen in FIGS. 3A-3B and 8A-8B. The elevation 40 may be configured to cooperate with the gripping part 30, to further improve the stability of the mechanical locking device. The elevation 40 preferably has a width W3 of about 3 mm. A thin elevation 40 may result in that the elevation 40 will break and fall of from the panel 2.

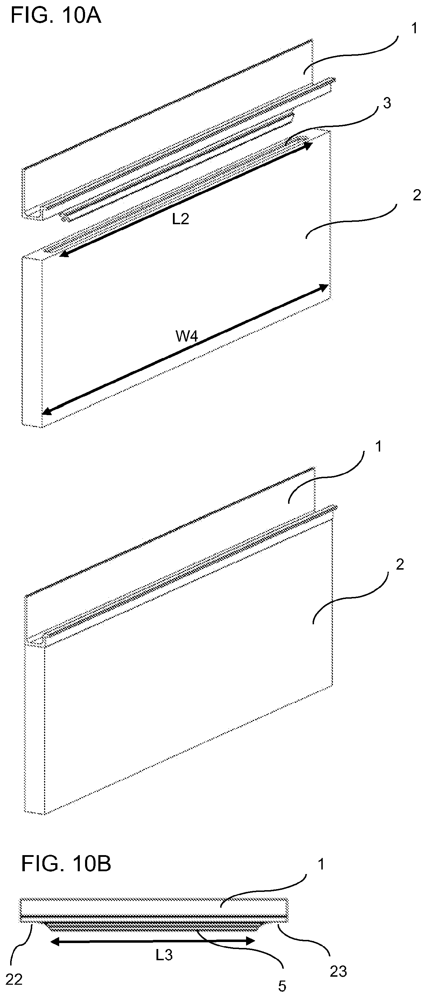

FIGS. 10A shows views of the component 1 and panel 2 in a non-locked and a locked position seen from the front of a drawer or cabinet. The embodiment of the locking groove 3 comprises a length L2 which is shorter than a width W4 of the panel 2.

FIG. 10B shows a side view of an embodiment of the component 1. The embodiment of the component 1 may comprise a locking element 5 which has a length L3 which is shorter than a width W4 of the panel 2.

A first and a second outer part 22, 23 of the embodiment of the component 1 may be flat at the first edge surface 11. The locking element 5 and/or the locking part 8 may be removed at the first and/or the second outer part 22, 23 by e.g. mechanical cutting, such as milling or sawing.

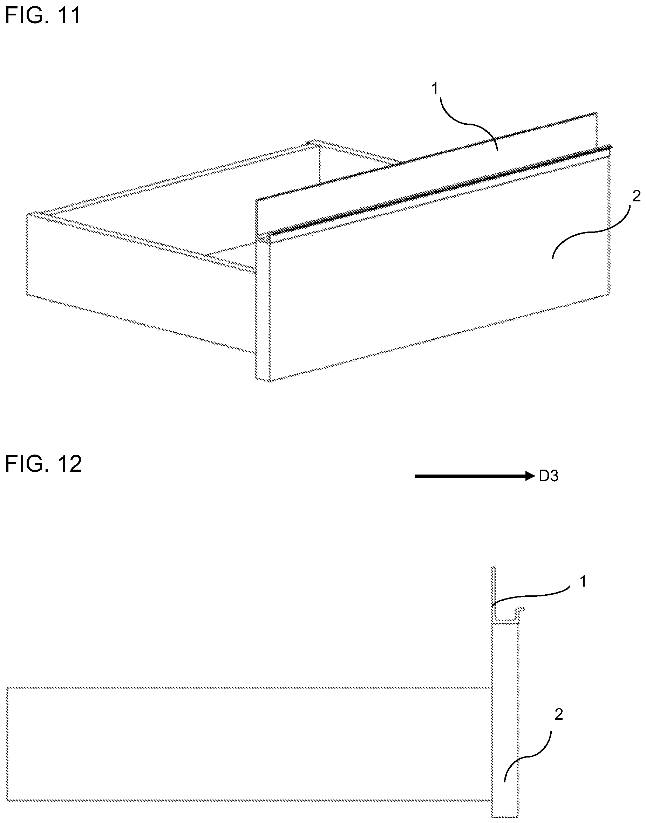

FIG. 11 shows a view of an assembled drawer. The drawer comprises a component 1 and a panel 2 according to an embodiment of the invention.

FIG. 12 shows a side view of an assembled drawer. The drawer comprises a component 1 and a panel 2 according to an embodiment of the invention, and the drawer is opened in the direction D3.

The locking of component 1 to the panel 2 may be further strengthened by applying an adhesive in the locking groove 3, on the first edge surface 11, on the second edge surface 21, on the elevation 40 and/or on the side of the gripping part 30 configured to cooperate with the elevation 40.

The core of the panel 2 may be a wood-based core, preferably made of MDF, HDF, OSB, WPC, plywood or particleboard. The core may also be a plastic core comprising thermosetting plastic or thermoplastic e.g. vinyl, PVC, PU or PET. The plastic core may comprise fillers. The panel 2 may also be of solid wood. The panel 2 may be provided with a decorative layer, such as a foil or a veneer, on one or more surfaces.

## Claims

1. A set comprising a component (1), a panel (2) and a mechanical locking device for locking the component (1) to the panel (2), wherein the component (1) comprises a first edge surface (11) and the panel (2) comprises a second edge surface (21), wherein
the mechanical locking device comprises a locking groove (3) at the second edge surface (21), the locking groove (3) comprising at least one tongue groove (4),
that the mechanical locking device comprises at least one locking element (5) at the first edge surface (11), the locking element (5) comprising at least one insertion groove (6) and a flexible tongue (7) positioned in the insertion groove (6),
that the flexible tongue (7) is configured to cooperate with the tongue groove (4) for locking of the component (1) to the panel (2) in a first direction (D1), which is perpendicular to the second edge surface (21),
that the component (1) is an extruded component with a fixed cross-section along an extrusion direction, which is perpendicular to the first direction (D1) and parallel to the second edge surface (21),
that the locking groove (3) comprises a first side wall (60) and an opposite second side wall (61) and a bottom surface (9) extending between the first side wall (60) and the second side wall (61),
that the tongue groove (4) is positioned at the first side wall (60) and/or at the second side wall (61), **characterized in**
**that** the component (1) further comprises at least one locking part (8) protruding from the first edge surface (11), wherein the locking part (8) is configured to cooperate with the first side wall (60) of the locking groove (3) for locking of the component (1) to the panel (2) in a second direction (D2), which is perpendicular to the first direction (D1),
**that** the component (1) comprises another locking part (8'), protruding from the first edge surface (11), configured to cooperate with the second side wall (61) of the locking groove (3) for locking of the component (1) to the panel (2) in a direction which is opposite to the second direction (D2).

2. The set as claimed in claim 1, wherein the component (1) is made of a metal, such as an aluminium material, or a plastic, such as a thermoplastic material.

3. The set as claimed in any one of the previous claims, wherein the locking element (5) comprises a neck (51), said neck (51) is positioned between the insertion groove (6) and the first edge surface (11), preferably the neck (51) is positioned between the locking part (8) and said another locking part (8').

4. The set as claimed in any one of the previous claims, wherein the insertion groove (6) is essentially parallel with the first edge surface (11), wherein the flexible tongue (7) is displaceable in the insertion groove (6).

5. The set as claimed in any one of the previous claims, wherein the locking element (5) comprises at least one protruding part (10) at a bottom surface (12) of the locking element (5), wherein the protruding part (10) is configured to cooperate with the bottom surface (9) of the locking groove (3) to counteract a displacement of the component (1) relative the panel (2) in an extrusion direction, which is perpendicular to the first direction (D1) and parallel to the second edge surface (21) .

6. The set as claimed in any one of the previous claims, wherein the first edge surface (11) is configured to cooperate with the second edge surface (21) for a locking of the component (1) to the panel (2) in a direction which is opposite to the first direction (D1).

7. The set as claimed in any one of the previous claims, wherein the bottom surface (9) of the locking groove (3) has a radial/curved shape.

8. The set as claimed in any one of the previous claims, wherein the panel (2) is a front panel of a furniture, for a cabinet or a drawer.

9. The set as claimed in any one of the previous claims, wherein the component (1) is a furniture component, such as e.g. a handle.

10. The set as claimed in claim 8 or claim 9, wherein an opening of the insertion groove (6) is in the opposite direction of the opening direction (D3) of the furniture.

11. The set as claimed in any one of the previous claims, wherein the component (1) comprises a gripping part (30) which protrudes from the first edge surface (11).

12. The set as claimed in claim 11, wherein the second edge surface (21) comprises an elevation (40) configured to cooperate with the gripping part (30).

## Patentansprüche

1. Satz, umfassend eine Komponente (1), eine Platte (2) und eine mechanische Verriegelungsvorrichtung für eine Verriegelung der Komponente (1) mit der Platte (2), wobei die Komponente (1) eine erste Kantenoberfläche (11) umfasst und die Platte (2) eine zweite Kantenoberfläche (21) umfasst, wobei die mechanische Verriegelungsvorrichtung eine Verriegelungsnut (3) an der zweiten Kantenoberfläche (21) umfasst, die Verriegelungsnut (3) umfassend mindestens eine Federnut (4),
dass die mechanische Verriegelungsvorrichtung mindestens ein Verriegelungselement (5) an der ersten Kantenoberfläche (11) umfasst, das Verriegelungselement (5) umfassend mindestens eine Einführnut (6) und eine flexible Feder (7), die in der Einführnut (6) positioniert ist,
dass die flexible Feder (7) konfiguriert ist, um mit der Federnut (4) für die Verriegelung der Komponente (1) mit der Platte (2) in einer ersten Richtung (D1) zusammenzuwirken, die senkrecht zu der zweiten Kantenoberfläche (21) ist,
dass die Komponente (1) eine extrudierte Komponente mit einem festen Querschnitt entlang einer Extrusionsrichtung ist, die senkrecht zu der ersten Richtung (D1) und parallel zu der zweiten Kantenoberfläche (21) ist,
dass die Verriegelungsnut (3) eine erste Seitenwand (60) und eine entgegengesetzte zweite Seitenwand (61) und eine untere Oberfläche (9), die sich zwischen der ersten Seitenwand (60) und der zweiten Seitenwand (61) erstreckt, umfasst,
dass die Federnut (4) an der ersten Seitenwand (60) und/oder an der zweiten Seitenwand (61) positioniert ist, **dadurch gekennzeichnet, dass** die Komponente (1) ferner mindestens ein Verriegelungsteil (8), das von der ersten Kantenoberfläche (11) hervorsteht, umfasst, wobei das Verriegelungsteil (8) konfiguriert ist, um mit der ersten Seitenwand (60) der Verriegelungsnut (3) für die Verriegelung der Komponente (1) mit der Platte (2) in einer zweiten Richtung (D2) zusammenzuwirken, die senkrecht zu der ersten Richtung (D1) ist,
dass die Komponente (1) ein anderes Verriegelungsteil (8') umfasst, das von der ersten Kantenoberfläche (11) hervorsteht, das konfiguriert ist, um mit der zweiten Seitenwand (61) der Verriegelungsnut (3) für die Verriegelung der Komponente (1) mit der Platte (2) in einer Richtung zusammenzuwirken, die der zweiten Richtung (D2) entgegengesetzt ist.

2. Satz nach Anspruch 1, wobei die Komponente (1) aus einem Metall, wie einem Aluminiummaterial, oder einem Kunststoff, wie einem thermoplastischen Material, hergestellt ist.

3. Satz nach einem der vorstehenden Ansprüche, wobei das Verriegelungselement (5) einen Hals (51) umfasst, wobei der Hals (51) zwischen der Einführnut (6) und der ersten Kantenoberfläche (11) positioniert ist, wobei der Hals (51) vorzugsweise zwischen dem Verriegelungsteil (8) und dem anderen Verriegelungsteil (8') positioniert.

4. Satz nach einem der vorstehenden Ansprüche, wobei die Einführnut (6) im Wesentlichen parallel zu der ersten Kantenoberfläche (11) ist, wobei die flexible Feder (7) in der Einführnut (6) verschiebbar ist.

5. Satz nach einem der vorstehenden Ansprüche, wobei das Verriegelungselement (5) mindestens ein hervorstehendes Teil (10) an einer unteren Oberfläche (12) des Verriegelungselements (5) umfasst, wobei das hervorstehende Teil (10) konfiguriert ist, um mit der unteren Oberfläche (9) der Verriegelungsnut (3) zusammenzuwirken, um einer Verschiebung der Komponente (1) relativ zu der Platte (2) in einer Extrusionsrichtung entgegenzuwirken, die senkrecht zu der ersten Richtung (D1) und parallel zu der zweiten Kantenoberfläche (21) ist.

6. Satz nach einem der vorstehenden Ansprüche, wobei die erste Kantenoberfläche (11) konfiguriert ist, um mit der zweiten Kantenoberfläche (21) für eine Verriegelung der Komponente (1) mit der Platte (2) in einer Richtung zusammenzuwirken, die der ersten Richtung (D1) entgegengesetzt ist.

7. Satz nach einem der vorstehenden Ansprüche, wobei die untere Oberfläche (9) der Verriegelungsnut (3) eine radiale/gebogene Form aufweist.

8. Satz nach einem der vorstehenden Ansprüche, wobei die Platte (2) eine vordere Platte eines Möbels, für einen Schrank oder eine Schublade ist.

9. Satz nach einem der vorstehenden Ansprüche, wobei die Komponente (1) eine Möbelkomponente, wie z. B. ein Griff, ist.

10. Satz nach Anspruch 8 oder 9, wobei eine Öffnung der Einführnut (6) in der entgegengesetzten Richtung der Öffnungsrichtung (D3) des Möbels ist.

11. Satz nach einem der vorstehenden Ansprüche, wobei die Komponente (1) ein Greifteil (30) umfasst, das von der ersten Kantenoberfläche (11) hervorsteht.

12. Satz nach Anspruch 11, wobei die zweite Kantenoberfläche (21) eine Erhöhung (40) umfasst, die konfiguriert ist, um mit dem Greifteil (30) zusammenzuwirken.

## Revendications

1. Ensemble comprenant un composant (1), un panneau (2) et un dispositif de verrouillage mécanique destiné à verrouiller le composant (1) au panneau (2), dans lequel le composant (1) comprend une première surface de bord (11) et le panneau (2) comprend une seconde surface de bord (21), dans lequel le dispositif de verrouillage mécanique comprend une rainure de verrouillage (3) au niveau de la seconde surface de bord (21), la rainure de verrouillage (3) comprenant au moins une rainure de languette (4),
que le dispositif de verrouillage mécanique comprend au moins un élément de verrouillage (5) au niveau de la première surface de bord (11), l'élément de verrouillage (5) comprenant au moins une rainure d'insertion (6) et une languette flexible (7) positionnée dans la rainure d'insertion (6),
que la languette flexible (7) est conçue pour coopérer avec la rainure de languette (4) pour verrouiller le composant (1) au panneau (2) dans une première direction (D1), qui est perpendiculaire à la seconde surface de bord (21),
que le composant (1) est un composant extrudé avec une section transversale fixe le long d'une direction d'extrusion, qui est perpendiculaire à la première direction (D1) et parallèle à la seconde surface de bord (21),
que la rainure de verrouillage (3) comprend une première paroi latérale (60) et une seconde paroi latérale (61) opposée et une surface inférieure (9) s'étendant entre la première paroi latérale (60) et la seconde paroi latérale (61),
que la rainure de languette (4) est positionnée au niveau de la première paroi latérale (60) et/ou au niveau de la seconde paroi latérale (61),
**caractérisé en ce que** le composant (1) comprend en outre au moins une partie de verrouillage (8) faisant saillie de la première surface de bord (11), dans lequel la partie de verrouillage (8) est conçue pour coopérer avec la première paroi latérale (60) de la rainure de verrouillage (3) pour verrouiller le composant (1) au panneau (2) dans une seconde direction (D2), qui est perpendiculaire à la première direction (D1),
**en ce que** le composant (1) comprend une autre partie de verrouillage (8'), faisant saillie de la première surface de bord (11), conçue pour coopérer avec la seconde paroi latérale (61) de la rainure de verrouillage (3) pour verrouiller le composant (1) au panneau (2) dans une direction qui est opposée à la seconde direction (D2).

2. Ensemble selon la revendication 1, dans lequel le composant (1) est constitué d'un métal, tel qu'un matériau en aluminium, ou d'un plastique, tel qu'un matériau thermoplastique.

3. Ensemble selon l'une quelconque des revendications précédentes, dans lequel l'élément de verrouillage (5) comprend un col (51), ledit col (51) est positionné entre la rainure d'insertion (6) et la première surface de bord (11) ; de préférence, le col (51) est positionné entre la partie de verrouillage (8) et ladite autre partie de verrouillage (8').

4. Ensemble selon l'une quelconque des revendications précédentes, dans lequel la rainure d'insertion (6) est essentiellement parallèle à la première surface de bord (11), dans lequel la languette flexible (7) peut être déplacée dans la rainure d'insertion (6).

5. Ensemble selon l'une quelconque des revendications précédentes, dans lequel l'élément de verrouillage (5) comprend au moins une partie saillante (10) au niveau d'une surface inférieure (12) de l'élément de verrouillage (5), dans lequel la partie saillante (10) est conçue pour coopérer avec la surface inférieure (9) de la rainure de verrouillage (3) afin de contrecarrer un déplacement du composant (1) par rapport au panneau (2) dans une direction d'extrusion, qui est perpendiculaire à la première direction (D1) et parallèle à la seconde surface de bord (21).

6. Ensemble selon l'une quelconque des revendications précédentes, dans lequel la première surface de bord (11) est conçue pour coopérer avec la seconde surface de bord (21) pour un verrouillage du composant (1) sur le panneau (2) dans une direction qui est opposée à la première direction (D1).

7. Ensemble selon l'une quelconque des revendications précédentes, dans lequel la surface inférieure (9) de la rainure de verrouillage (3) a une forme radiale/courbe.

8. Ensemble selon l'une quelconque des revendications précédentes, dans lequel le panneau (2) est un panneau avant d'un meuble, pour une armoire ou un tiroir.

9. Ensemble selon l'une quelconque des revendications précédentes, dans lequel le composant (1) est un composant d'ameublement, tel que par exemple une poignée.

10. Ensemble selon la revendication 8 ou la revendication 9, dans lequel une ouverture de la rainure d'insertion (6) est dans la direction opposée à la direction d'ouverture (D3) du meuble.

11. Ensemble selon l'une quelconque des revendications précédentes, dans lequel le composant (1) comprend une partie de préhension (30) qui fait saillie de la première surface de bord (11).

12. Ensemble selon la revendication 11, dans lequel la seconde surface de bord (21) comprend une élévation (40) conçue pour coopérer avec la partie de préhension (30).
